# EUROPEAN PATENT APPLICATION

(11) **EP 4 375 658 A1**
(43) Date of publication of application: **29.05.2024**
(21) Application number: 22848892.0
(22) Date of filing: 08.03.2022
(51) Int. Cl.: G01N 30/26, G01N 30/32

(54) **LIQUID CHROMATOGRAPH AND LIQUID SAMPLE ANALYSIS METHOD**

(30) Priority: 26.07.2021 JP 2021121965
(71) Applicant: Ushio Denki Kabushiki Kaisha, Tokyo 100-8150 (JP)
(72) Inventor: ABE, Ryoji, Tokyo 100-8150 (JP); OWADA, Tatsushi, Tokyo 100-8150 (JP); SUZUKI, Shinji, Tokyo 100-8150 (JP)
(74) Representative: Maiwald GmbH
(86) International application number: PCT/JP2022/009890
(87) International publication number: WO 2023/007808

(57) **Abstract**

There is provided a liquid chromatograph and a method of analyzing a liquid sample that are capable of improving the separation resolution and the measurement accuracy of respective components while achieving downsizing and cost reduction of the chromatograph. The liquid sample analysis apparatus (HPLC apparatus) comprises a single pump, a switching valve, a column (HPLC column), a first flow channel, a second flow channel, an air introduction channel, a detector, and a controller unit. The controller unit controls the pump and the switching valve to switch introduction of the eluent and the liquid sample into the first flow channel, and to introduce air bubbles from the air introduction channel between the eluent and the liquid sample to generate an air-segmented liquid sample in the first flow channel. The controller unit also controls the pump and the switching valve to flow the eluent and the air-segmented liquid sample from the first flow channel into the second flow channel to dissolve the air bubbles passing through the second flow channel into at least one of the eluent and the liquid sample.

## Description

### TECHNICAL FIELD

The present invention relates to a liquid chromatograph and a liquid sample analysis method.

### BACKGROUND ART

Conventionally, chromatographs have been known as sample analysis apparatuses for analyzing the components of samples. Chromatographs are analyzers in which the mobile phase medium is pressurized by a pump or the like and passed through a column to separate and detect an analyte (i.e., component to be analyzed) with higher performance using the difference in the interaction between the stationary phase and the mobile phase. In the analysis of gaseous samples, gas chromatographs, which use a gas called a carrier gas as the mobile phase medium, are used. On the other hand, in the analysis of liquid samples, liquid chromatographs, which use a liquid called an eluent as the mobile phase medium, are used.

A High Performance Liquid Chromatography (hereinafter referred to as "HPLC") has been known as a method for analyzing the components of liquid samples, which is capable of simply analyze liquid samples containing multiple components, such as hydroponic culture medium.

For example, Non-Patent Literature 1 ("Sample Introduction Device in Liquid Chromatography", Hirohisa Mikami and one other, CHROMATOGRAPHY, 2011, vol. 32, No. 1, p. 17-21) discloses a sample introduction apparatus used in the HPLC. The disclosed sample introduction apparatus is equipped with a switching valve that can switch the connection and separation of a mobile phase flow channel leading to a column and a sample loop into which the sample is introduced. The sample introduction apparatus first allows the mobile phase (i.e., eluent) pressurized by a first pump to flow through the column via the switching valve. A sample containing the component to be analyzed (i.e., analyte) is introduced into the sample loop by a second pump, disconnected from a mobile phase flow channel. Subsequently, the sample is introduced into the mobile phase flow channel by connecting the mobile phase flow channel to the sample loop, and the mobile phase (i.e., eluent) containing the sample is introduced into the column.

As such, a conventional HPLC apparatus is equipped with a first pump for introducing a mobile phase (i.e., eluent) into a column, a second pump for introducing a sample into a sample loop, and a switching valve that can switch the connection and separation between a mobile phase flow channel and the sample loop.

Furthermore, in such HPLC apparatuses, for example, Patent Literature 1 (Publication of Japanese Patent No. 5114471 B) discloses a technique for placing bubbles in the sample loop in order to reduce pressure and flow turbulence in the sample loop and to separate the sample from preceding or following samples.

### LISTING OF REFERENCES

### PATENT LITERATURE

PATENT LITERATURE 1: Publication of Japanese Patent No. 5114471 B
NON-PATENT LITERATURE 1: "Sample Introduction Device in Liquid Chromatography", Hirohisa Mikami and one other, CHROMATOGRAPHY, 2011, vol. 32, No. 1, p. 17-21.

### SUMMARY OF THE INVENTION

### PROBLEMS TO BE SOLVED BY THE INVENTION

The conventional HPLC apparatus described above is equipped with two pumps and is configured to separate and connect the mobile phase flow channel and the sample loop, making the HPLC apparatus larger in size and more costly. Therefore, it may be conceivable to use only one pump in an HPLC apparatus, eliminating the above configuration of separating and connecting the mobile phase flow channel and the sample loop. In this case, downsizing and cost reduction of the HPLC apparatus would be achieved.

However, in the case of the HPLC apparatus using only one pump, there is no sample loop of separation-type (i.e., flow channel switching type). Therefore, in this type of HPLC apparatus, the mobile phase (i.e., eluent) and the sample are switched therebetween to be introduced into a single flow channel leading to the HPLC column, and the mobile phase (i.e., eluent) and the sample flow simultaneously in the single flow channel. At this time, the pump repeatedly performs suction and discharge operations. For this reason, undesired diffusion of the sample in the single flow channel is likely to occur. When such an undesired diffusion of the sample occurs, even if the sample is introduced into the HPLC column, the separation of the sample in the HPLC column would be insufficient for analysis.

As mentioned above, because of the simplified apparatus configuration, it may entail problems that could not occur in the conventional HPLC apparatus of the separation-type (i.e., flow channel switching type).

The above Patent Literature 1 discloses an apparatus that places air bubbles in the sample loop to reduce the pressure and flow turbulence in the sample loop. However, when air bubbles are introduced into the HPLC column or the detector, it may entail problems that the separation of the component to be detected in the HPLC column may be insufficient, and noise caused by air (i.e., air bubbles) may be generated in the detector. Therefore, it has been generally understood that introducing air (i.e., air bubbles) into the flow channel should be avoided in the HPLC apparatus. The technique disclosed in the above Patent Literature 1 may reduce the adverse effects of the pressure and flow turbulence, however, the above problems caused by air bubbles introduced into the flow channel may still occur.

The present invention has been made in order to solve the above mentioned problems and an object thereof is to provide a liquid chromatograph and a method of analyzing a liquid sample that are capable of improving the separation resolution and the measurement accuracy of respective components while achieving downsizing and cost reduction of the chromatograph apparatus.

### SOLUTION TO PROBLEMS

In order to solve the above mentioned problems, according to one aspect of the present invention, there is provided a liquid chromatograph comprising: a single pump configured to suction and discharge a fluid; a switching valve equipped with ports in multiple directions; a column to which a liquid containing an eluent and a liquid sample is fed, the column being configured to separate a component of the liquid sample by interaction with a stationary phase retained inside the column; a first flow channel configured to connect between the pump and the switching valve to allow the eluent and the liquid sample to flow simultaneously therethrough; a second flow channel configured to connect between the switching valve and the column to allow the eluent and the liquid sample to flow simultaneously therethrough; an air introduction channel connected at one end thereof to the switching valve; a detector configured to detect the component separated in the column; and a controller unit configured to control the pump and the switching valve, the controller unit controlling the pump and the switching valve to switch introduction of the eluent and the liquid sample into the first flow channel, and to introduce air bubbles from the air introduction channel between the eluent and the liquid sample to generate an air-segmented liquid sample in the first flow channel containing the eluent therein, the air-segmented liquid sample having the air bubbles, the liquid sample, and the air bubbles arranged therein in order, and the controller unit controlling the pump and the switching valve to flow the eluent and the air-segmented liquid sample from the first flow channel into the second flow channel to dissolve the air bubbles passing through the second flow channel into at least one of the eluent and the liquid sample.

As such, since the eluent and the liquid sample are segmented by air bubbles in the flow channel through which the eluent and the liquid sample flow simultaneously, it makes it possible to suppress the undesired diffusion of the liquid sample even when the pump is operated for suction or discharge. In addition, the air bubbles introduced between the eluent and the liquid sample are dissolved into the eluent or the liquid sample in the second flow channel, so that the air bubbles are prevented from being introduced into the column or the detector. In other words, it makes it possible to introduce a liquid containing the eluent and the liquid sample into the column in a state where the diffusion of the liquid sample is suppressed and the air bubbles disappear.

As a result, it makes it possible to appropriately perform the separation of components to be detected in the column, while suppressing the generation of noise caused by air (i.e., air bubbles) in the detector.

Furthermore, in the above liquid chromatograph, the controller unit may dissolve the air bubbles into at least one of the eluent and the liquid sample immediately before a liquid inlet of the column in the second flow channel.

In this case, it makes it possible to appropriately segment the eluent from the liquid sample until immediately before the liquid inlet of the column and to suppress the undesired diffusion of the liquid sample. Therefore, it makes it possible to reduce the degradation of the separation resolution in the column more appropriately.

Yet furthermore, in the above liquid chromatograph, the controller unit may control a volume of the air bubbles to be introduced from the air introduction channel between the eluent and the liquid sample to dissolve the air bubbles passing through the second flow channel into at least one of the eluent and the liquid sample.

In this case, it makes it possible to introduce air bubbles into the second flow channel in such volumes that the introduced air bubbles can dissolve in the eluent or the liquid sample. Therefore, it makes it possible to appropriately suppress air bubbles from being introduced into the column and the detector.

Yet furthermore, in the above liquid chromatograph, the volume of the air bubbles to be introduced between the eluent and the liquid sample may be set based on a discharge rate per unit time of the pump when flowing the air-segmented liquid sample from the first flow channel into the second flow channel, conductance of the column, channel diameters of the first flow channel and the second flow channel, and lengths of the first flow channel and the second flow channel.

In this case, it makes it possible to introduce an appropriate volume of air bubbles, considering the pressure value inside the second flow channel that is assumed to be applied by the pumping operation. Therefore, it makes it possible to reliably dissolve the air bubbles in the eluent or the liquid sample in the second flow channel.

Yet furthermore, in the above liquid chromatograph, the volume of the air bubbles to be introduced between the eluent and the liquid sample may be set to be equal to or greater than 1 microliter and equal to or less than 45 microliters.

In this case, it makes it possible to dissolve the air bubbles in the eluent or the liquid sample in the second flow channel more appropriately.

Yet furthermore, in the above liquid chromatograph, the controller unit may control a discharge rate per unit time of the pump when flowing the air-segmented liquid sample from the first flow channel into the column through the second flow channel to dissolve the air bubbles passing through the second flow channel into at least one of the eluent and the liquid sample.

In this case, it makes it possible to control the pressure inside the second flow channel to a pressure value that will dissolve the air bubbles into the eluent or the liquid sample. Therefore, it makes it possible to appropriately suppress air bubbles from being introduced into the column or the detector.

Yet furthermore, in the above liquid chromatograph, the discharge rate per unit time of the pump when flowing the air-segmented liquid sample from the first flow channel into the column through the second flow channel may be set based on a volume of the air bubbles introduced from the air introduction channel, conductance of the column, channel diameters of the first flow channel and the second flow channel, and lengths of the first flow channel and the second flow channel.

In this case, it makes it possible to appropriately control the discharge rate per unit time of the pump, considering the pressure value (i.e., target pressure value) required to dissolve the introduced air bubbles. Therefore, it makes it possible to reliably dissolve the air bubbles into the eluent or the liquid sample in the second flow channel.

Yet furthermore, the above liquid chromatograph may further comprise a pressure relief unit arranged downstream of the detector.

In this case, it allows the pressure in the flow channel downstream of the column to be maintained by the pressure relief unit, and it prevents the fluid discharged from the column from being pressure-relieved so as to prevent the formation of air bubbles again.
Therefore, it makes it possible to appropriately suppress air bubbles from being introduced into the detector.

Yet furthermore, in the above liquid chromatograph, the pressure relief unit may include a flow channel provided on a flow channel downstream of the detector and having a cross-sectional area smaller than a cross-sectional area of a third flow channel connecting the column to the detector.

In this case, it makes it possible to appropriately maintain the pressure in the flow channel downstream of the column with a relatively simple configuration.

Yet furthermore, the above liquid chromatograph may further comprise: an eluent flow channel configured to collect the eluent stored in an eluent tank; and a liquid sample flow channel configured to collect the liquid sample stored in a liquid sample tank, wherein one end of the eluent flow channel and one end of the liquid sample flow channel are connected to the switching valve, respectively.

In this case, it makes it possible to appropriately allow the eluent and the liquid sample to be injected into the first flow channel and to be delivered into the second flow channel by controlling the single pump and the switching valve.

According to another aspect of the present invention, there is provided a method of analyzing a liquid sample performed by a liquid chromatograph, the liquid chromatograph comprising: a single pump configured to suction and discharge a fluid; a switching valve equipped with ports in multiple directions; a column to which a liquid containing an eluent and a liquid sample is fed, the column being configured to separate a component of the liquid sample by interaction with a stationary phase retained inside the column; a first flow channel configured to connect between the pump and the switching valve to allow the eluent and the liquid sample to flow simultaneously therethrough; a second flow channel configured to connect between the switching valve and the column to allow the eluent and the liquid sample flow simultaneously therethrough; an air introduction channel connected at one end thereof to the switching valve; and a detector configured to detect the component separated in the column, the method comprising: a first step of controlling the pump and the switching valve to introduce a portion of the eluent from the first flow channel into the column through the second flow channel to fill the column with the eluent; a second step of controlling the pump and the switching valve to introduce the liquid sample and air bubbles from the air introduction channel into the first flow channel containing the eluent therein to generate an air-segmented liquid sample in the first flow channel containing the eluent therein, the air-segmented liquid sample having the air bubbles, the liquid sample, and the air bubbles arranged therein in order; a third step of controlling the pump and the switching valve to allow the eluent and the air-segmented liquid sample to flow from the first flow channel to the second flow channel; a fourth step of dissolving the air bubbles passing through the second flow channel into at least one of the eluent and the liquid sample; and a fifth step of separating a liquid containing the eluent and the liquid sample with the column and detecting a separated component of the liquid sample by the detector.

As such, since the eluent and the liquid sample are segmented by air bubbles in the flow channel through which the eluent and the liquid sample flow simultaneously, it makes it possible to suppress the undesired diffusion of the liquid sample even when the pump is operated for suction or discharge. In addition, air bubbles introduced between the eluent and the liquid sample are dissolved in the eluent or the liquid sample in the second flow channel, so that the air bubbles are prevented from being introduced into the column or the detector. In other words, it makes it possible to introduce the liquid containing the eluent and the liquid sample into the column in a state where the diffusion of the liquid sample is suppressed and the air bubbles disappear.

As a result, it makes it possible to appropriately perform the separation of components to be detected in the column, while suppressing the generation of noise caused by air (i.e., air bubbles) in the detector.

Yet furthermore, in the above method of analyzing a liquid sample, the second step may control the pump and the switching valve to introduce air bubbles from the air introduction channel through the switching valve into the first flow channel containing the eluent therein; subsequently control the pump and the switching valve to introduce the liquid sample from a liquid sample flow channel through the switching valve into the first flow channel, the liquid sample flow channel being connected at one end thereof to the switching valve and configured to collect the liquid sample stored in a liquid sample tank; and subsequently controls the pump and the switching valve to introduce air bubbles from the air introduction channel through the switching valve into the first flow channel.

In this case, it makes it possible to appropriately generate an air-segmented liquid sample having air bubbles, the liquid sample, and air bubbles being arranged in that order in the first flow channel containing the eluent therein, and to appropriately segment the eluent from the liquid sample by the air bubbles.

Yet furthermore, in the above method of analyzing a liquid sample, the second step may be performed after the first step has been performed, an operation of the pump has been stopped, and a certain standby time has elapsed.

In this case, it makes it possible to reduce the pressure in the first flow channel and the second flow channel, which has increased due to the discharging operation of the pump in the first step, during the standby time when the pump operation is being stopped. By performing the second step after lowering the pressure in the flow channels, it makes it possible to prevent the eluent in the first and second flow channels from flowing back into the air introduction channel when the switching valve is switched to introduce air bubbles from the air introduction channel in the second step. As a result, it makes it possible to introduce the desired amount of air bubbles into the first flow channel.

Yet furthermore, in the above method of analyzing a liquid sample, the first step may control the pump and the switching valve to introduce the eluent from an eluent flow channel through the switching value into the first flow channel, the eluent flow channel being connected at one end thereof to the switching value and configured to collect the eluent stored in an eluent tank; and subsequently control the pump and the switching valve to introduce a portion of the eluent from the first flow channel through the second flow channel into the column to fill the column with the eluent.

In this case, it makes it possible to replace a fluid in the flow channels, which include the first and second flow channels and the column, with the eluent as appropriate.

Yet furthermore, in the above method of analyzing a liquid sample, the second step may introduce air bubbles of a prescribed volume set based on a discharge rate per unit time of the pump in the third step, conductance of the column, channel diameters of the first flow channel and the second flow channel, and lengths of the first flow channel and the second flow channel.

In this case, it makes it possible to introduce an appropriate volume of air bubbles, considering the pressure value inside the second flow channel that is assumed to be generated by the pumping operation. Therefore, it makes it possible to reliably dissolve the introduced air bubbles into the eluent or the liquid sample in the second flow channel.

Yet furthermore, in the above method of analyzing a liquid sample, the second step may introduce the air bubbles of a volume equal to or greater than 1 microliter and equal to or less than 45 microliters between the eluent and the liquid sample.

In this case, it makes it possible to dissolve air bubbles as appropriate in the eluent or the liquid sample in the second flow channel.

Yet furthermore, in the above method of analyzing a liquid sample, the fourth step may control the discharge rate per unit time of the pump based on a volume of the air bubbles introduced from the air introduction channel in the second step, conductance of the column, channel diameters of the first flow channel and the second flow channel, and lengths of the first flow channel and the second flow channel.

In this case, it makes it possible to control the discharge rate per unit time of the pump as appropriate, considering the pressure value (i.e., target pressure value) required to dissolve the introduced air bubbles. Therefore, it makes it possible to reliably dissolve the introduced air bubbles into the eluent or the liquid sample in the second flow channel.

### ADVANTAGEIOUS EFFECT OF THE INVENTION

According to the present invention, it makes it possible to improve the separation resolution and the measurement accuracy of respective components while achieving downsizing and cost reduction of the chromatograph apparatus.

The above mentioned and other not explicitly mentioned objects, aspects and advantages of the present invention will become apparent to those skilled in the art from the following embodiments (detailed description) of the invention by referring to the accompanying drawings and the appended claims.

### BRIEF DESCRIPTION OF DRAWINGS

FIG. 1 is a schematic diagram illustrating an exemplary configuration of a liquid sample analysis apparatus according to the present embodiment.
FIG. 2 is a schematic diagram sequentially illustrating an exemplary operation of the liquid sample analysis apparatus.
FIG. 3 is a schematic diagram sequentially illustrating an exemplary operation of the liquid sample analysis apparatus.
FIG. 4 is a schematic diagram sequentially illustrating an exemplary operation of the liquid sample analysis apparatus.
FIG. 5 is a schematic diagram sequentially illustrating an exemplary operation of the liquid sample analysis apparatus.
FIG. 6 is a schematic diagram sequentially illustrating an exemplary operation of the liquid sample analysis apparatus.
FIG. 7 is a schematic diagram sequentially illustrating an exemplary operation of the liquid sample analysis apparatus.
FIG. 8 is a schematic diagram sequentially illustrating an exemplary operation of the liquid sample analysis apparatus.
FIG. 9 is a schematic diagram illustrating an exemplary image of an air-segmented sample.
FIG. 10 is a schematic diagram sequentially illustrating an exemplary operation of the liquid sample analysis apparatus.
FIG. 11 is a schematic diagram illustrating an exemplary image of the air-segmented sample in a compressed state.
FIG. 12 is a schematic diagram sequentially illustrating an exemplary operation of the liquid sample analysis apparatus.
FIG. 13 is a schematic diagram illustrating an exemplary image of the air-segmented sample immediately before being introduced into a column.
FIG. 14 is a schematic diagram illustrating an exemplary basic configuration of a liquid sample analysis system.
FIG. 15 is a schematic diagram illustrating another exemplary basic configuration of the liquid sample analysis system.
FIG. 16 is a schematic diagram illustrating an exemplary configuration of a conventional liquid sample analysis apparatus.
FIG. 17 is a chart illustrating an example of a signal obtained from a detector of the liquid sample analysis apparatus.

### DESCRIPTION OF EMBODIMENTS

Analysis systems employing the liquid chromatography are used, for example, as a detection system for detecting objects of infectious diseases and the like earlier as a countermeasure against terrorism or pandemics, or as a situation monitoring system based on analysis information at multiple locations to prevent the spread of the above objects of infectious diseases.

In infectious disease testing, RNAs or DNAs of target pathogens or viruses may be analyzed directly as objects to be tested by the liquid chromatography. Alternatively, the RNAs or DNAs of the target may be analyzed by the liquid chromatography via sensitization methods such as PCR, LAMP, hybridization, and intercalator methods.

The above infectious diseases include, for example, anthrax, avian influenza, Crimean-Congo hemorrhagic fever, dengue fever, Ebola hemorrhagic fever, Hendra virus infection, hepatitis, influenza, Lassa fever, Meningococcal disease, Nipah virus infection, plague, lift Valley fever, Severe Acute Respiratory Syndrome (SARS), smallpox, hare disease, and yellow fever.

Analysis systems employing the liquid chromatography are also used as systems for monitoring the quality of drinking water and the like at manufacturing factories of drinking water and the like, and for analyzing the components of nutrient solutions in which nutrients necessary for plants (e.g., vegetables and other crops) are dissolved in water at plant factories.

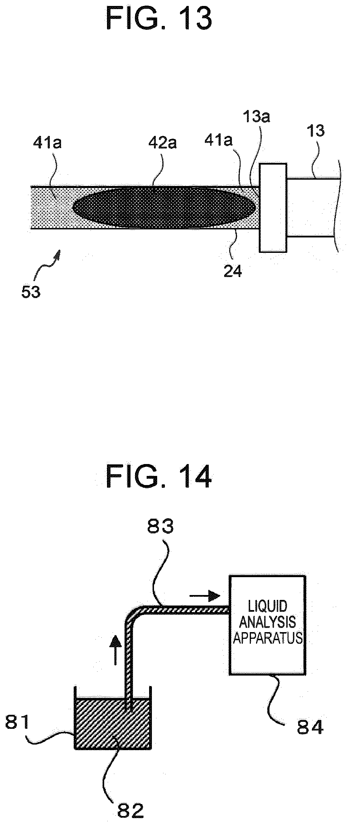

FIG. 14 is a schematic diagram illustrating an exemplary liquid analysis system in a manufacturing factory for drinking water and other products.

As shown in this FIG. 14, in a manufacturing factory of drinking water and the like, in order to monitor the quality of drinking water and the like to be manufactured, a portion of a liquid 82 of drinking water to be analyzed is collected from a liquid tank 81 that stores drinking water and the like. The collected liquid 82 is then pumped to a liquid analysis apparatus 84 through a liquid sample collection channel 83, and is analyzed for its components by the liquid analysis apparatus 84.

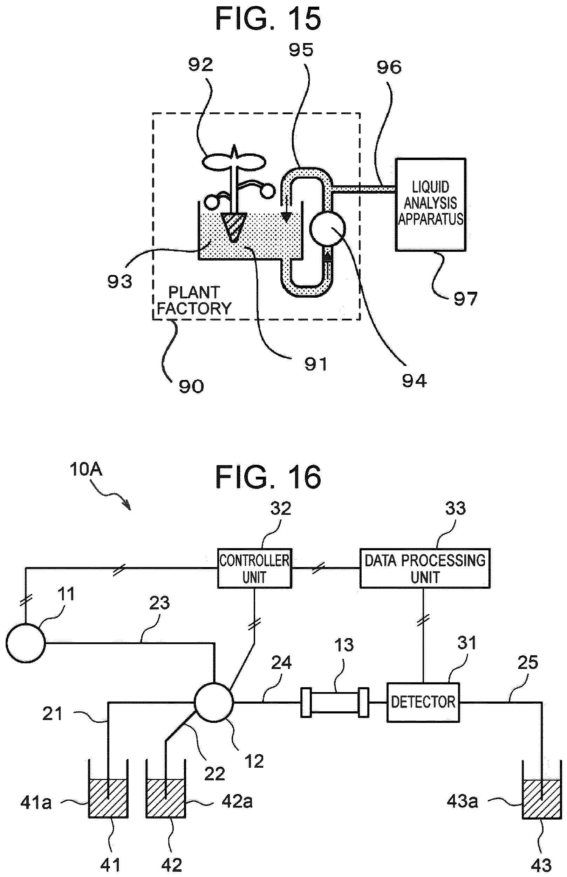

FIG. 15 is a schematic diagram illustrating another exemplary liquid analysis system in a plant factory.

Generally, in plant factories, the nutrient solution cultivation is performed using a nutrient solution in which the nutrients necessary for plants (e.g., vegetables and other crops) are dissolved in water. FIG. 15 shows an example of the hydroponics of the circulating type, as one of the nutrient solution cultivations, in which a nutrient solution 91 is circulated therein.

As shown in this FIG. 15, the nutrient solution 91 supplied to a cultivation tank 93 in which a crop 92 is grown is circulated by a feed pump 94 through a circulation flow channel 95. A portion of the circulating nutrient solution 91 is automatically collected, for example, via a liquid sample collection channel 96 that branches off from a portion of the circulation flow channel 95, and the collected nutrient solution 91 is analyzed for its components by a liquid analysis apparatus 97.

In the case of the hydroponics of the circulating type, the composition of the nutrient solution retained in the cultivation tank changes as the nutrient solution is circulated. Since plant growth is affected by the nutrient solution components, the nutrient solution is adjusted as necessary based on the results of the nutrient solution analysis.

The High Performance Liquid Chromatography (HPLC) apparatuses may be used as the liquid analysis apparatuses 84 and 97, which are capable of easily analyzing multiple components in a liquid sample.

Analysis apparatuses in those systems are required to be smaller in size and inexpensive, and to be installed in any location.

Hereinafter, non-limiting embodiments of the present invention will be described in detail with reference to the accompanying drawings.

### First Embodiment

First, an example of a conventional HPLC apparatus with downsized and low-cost configuration will be described with reference to FIG. 16.

FIG. 16 is a schematic diagram illustrating an exemplary configuration of a conventional HPLC apparatus 10A.

The HPLC apparatus 10A is equipped with a pump 11, a switching valve 12, and an HPLC column 13. A controller unit 32 controls the operations of the pump 11 and switching valve 12 to introduce an eluent 41a, which is the mobile phase medium stored in an eluent tank 41, and a liquid sample 42a, which is stored in a liquid sample tank 42, into an HPLC column 13 through an eluent flow channel 21 and a liquid sample flow channel 22, respectively.

The liquid sample 42a introduced into the HPLC column 13 is separated for each of components by the HPLC column 13. The separated components are then detected in the detector 31, and the detection data from the detector 31 is analyzed in a data processing unit 33 to identify and quantify each of the separated components. The analysis results analyzed by the data processing unit 33 are transmitted, for example, to the controller unit 32.

The eluent 41a and the liquid sample 42a that have passed through the HPLC column 13 and the detector 31 are retained as a waste liquid 43a in a waste liquid tank 43 through the waste liquid flow channel 25.

As the liquid sample 42a flows through the HPLC column 13 together with the eluent 41a, respective components of the liquid sample 42a move while interacting with the HPLC column 13, which is the stationary phase.

The difference in the intensity of the interaction between each of components and the HPLC column 13 determines the time at which each of components elutes from the HPLC column 13. In other words, each of components contained in the liquid sample 42a is separated using the difference in elution time of each component passing through the HPLC column 13.

The separated components are detected by the detector 31. At this time, the detector 31 detects a signal corresponding to each of components, corresponding to the retention time of each of components in the HPLC column 13. In other words, the signal corresponding to each of components is time dependent. Here, the retention time is the time from inflow into the HPLC column 13 until elution from the HPLC column 13 and detection by the detector 31.

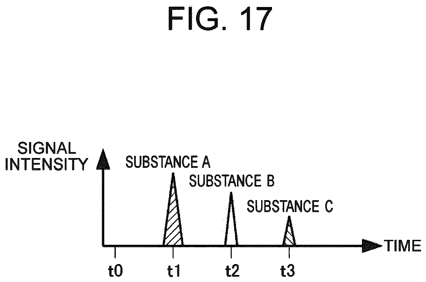

For example, assuming that the liquid sample 42a contains a substance A, a substance B, and a substance C, and the retention times of the substance A, the substance B, and the substance C passing through the HPLC column 13 are t1, t2, and t3 (t1 < t2 < t3), respectively, then signals corresponding to the substance A, the substance B, and the substance C are in turn obtained from the detector 31 in sequence as shown in FIG. 17.

The HPLC apparatus 10A shown in FIG. 16 operates roughly as follows.

First, HPLC apparatus 10A introduces the eluent 41a from the eluent tank 41 into the first flow channel 23 through the eluent flow channel 21 and the switching valve 12 by the suction operation of the pump 11 (Process 1).

Subsequently, the HPLC apparatus 10A introduces the eluent 41a in the first flow channel 23 into the HPLC column 13 through the first flow channel 23, the switching valve 12, and the second flow channel 24 by the discharge operation of the pump 11 (Process 2). At this time, at least a portion of the eluent 41a introduced into the HPLC column 13 is stored as the waste liquid 43a in the waste liquid tank 43 through the detector 31 and the waste liquid flow channel 25.

Yet subsequently, the HPLC apparatus 10A introduces the liquid sample 42a from the liquid sample tank 42 into the first flow channel 23 through the sample flow channel 22 and the switching valve 12 by suction operation of the pump 11 (Process 3). At this time, the liquid sample 42a is mixed in the first flow path 23 with the eluent 41a remaining in the first flow channel 23.

Yet subsequently, the HPLC apparatus 10A introduces the eluent 41a and the liquid sample 42a in the first flow channel 23 into the HPLC column 13 through the switching valve 12 and the second flow channel 24 by the discharge operation of the pump 11 (Process 4). Then, each of components constituting the liquid sample 42a in the eluent 41a is separated by the HPLC column 13, and respective components are introduced in turn into the detector 31 in the order in which they are separated.

Yet subsequently, the detector 31 detects the liquid sample 42a introduced for each of components (Process 5). After detection, the eluent 41a and the liquid sample (i.e., each component) 42a are stored as the waste liquid 43a in the waste liquid tank 43 through the waste liquid flow channel 25 (Process 6).

The HPLC apparatus 10A shown in FIG. 16 is equipped with a single pump and does not require two pumps to introduce the eluent and the liquid sample, respectively, as is the case with a separation type (i.e., flow channel switching type) HPLC apparatus in which the eluent flow channel and the sample flow channel are separated from each other. Therefore, the HPLC apparatus 10A enables downsizing and cost reduction of the HPLC apparatus.
However, the pump 11, which is constituted with, for example, a syringe pump, displaces the liquid in the flow channels by repeatedly performing suction and discharge operations. In order to introduce the liquid sample 41a into the HPLC column 13, it is required to go through the processes 1 through 4 as described above, and the suction and discharge operations of the pump 11 are also performed multiple times.

When the suction and discharge operations of the pump 11 are performed as described above, in some cases undesired diffusion of the liquid sample 42a may occur in the flow channels. Once the undesired diffusion of the liquid sample 42a occurs, even when a liquid containing the eluent 41a and the liquid sample 42a is introduced into the HPLC column 13, the separation of the liquid sample in the HPLC column 13 is likely to be insufficient.

An HPLC apparatus according to the present embodiment is a compact and low-cost HPLC apparatus with a single mounted pump, and able to suppress defects such as undesired diffusion of the sample (i.e., liquid sample) in the flow channels. More specifically, the HPLC apparatus according to the present embodiment has a configuration in which air bubbles are provided in front and behind the sample (i.e., liquid sample), respectively, in the flowing direction in the flow channel (hereinafter referred to as "air-segmented sample"), thereby suppressing the undesired diffusion of the sample (i.e., liquid sample) in the flow channels.

However, when the air-segmented sample (i.e., air-segmented liquid sample) is subsequently introduced into the HPLC column or the detector, the separation of the components to be detected in the HPLC column may be insufficient, or noise due to air (i.e., air bubbles) may occur in the detector.

For this reason, the HPLC apparatus according to the present embodiment employs a configuration that uses the air-segmented sample to suppress defects such as undesired diffusion of the sample (i.e., liquid sample) in the flow channels, while ensuring that the air bubbles constituting the air-segmented sample disappear before they are introduced into the HPLC column to avoid possible defects in the column and the detector caused by air.

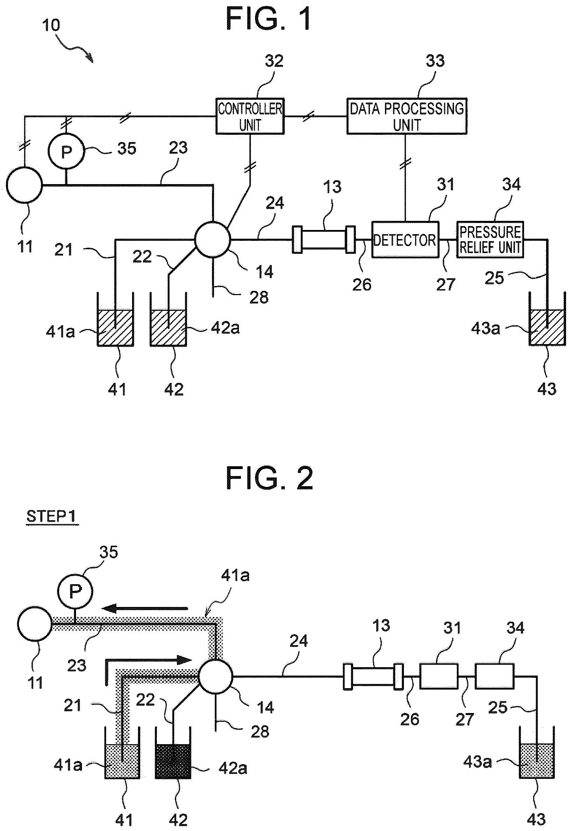

FIG. 1 is a schematic diagram illustrating an exemplary configuration a liquid analysis system equipped with a liquid analysis apparatus (i.e., HPLC apparatus) 10 according to the present embodiment.

The HPLC apparatus 10 shown in FIG. 1 is an HPLC apparatus using only one pump, similarly to the HPLC apparatus 10A shown in FIG. 16 above, and parts having the same configuration as the HPLC apparatus 10A shown in FIG. 16 are marked with the same reference signs as in FIG. 16.

More specifically, the configuration of the HPLC apparatus 10 shown in FIG. 1, except for a switching valve 14, a pressure relief unit 34, and a pressure gauge 35, is identical to the configuration of the HPLC apparatus 10A shown in FIG. 16.

The HPLC apparatus 10 is equipped with a single pump 11, the switching valve 14 with ports in multiple directions, and an HPLC column 13 (corresponding to the column of the present invention), in this order. The HPLC apparatus 10 is also equipped with an eluent flow channel 21, a sample flow channel 22 (i.e., liquid sample flow channel), a first flow channel 23, a second flow channel 24, a third flow channel 26, a fourth flow channel 27, a waste liquid flow channel 25, and an air introduction channel 28. In addition, the HPLC apparatus 10 is equipped with a detector 31, a controller unit 32, a data processing unit 33, the pressure relief unit 34, and the pressure gauge 35.

The eluent flow channel 21 is a flow channel that introduces an eluent 41a stored in an eluent tank 41 into the first flow channel 23. The sample flow channel 22 is a flow channel that introduces the sample (i.e., liquid sample) 42a stored in a sample tank 42 (corresponding to the liquid sample tank of the present invention) into the first flow channel 23. One end of the eluent flow channel 21 and one end of the sample flow channel 22 are connected to the switching valve 14, respectively.

The first flow channel 23 is a flow channel that connects the pump 11 to the switching valve 14. The second flow channel 24 is a flow channel that connects the switching valve 14 to the HPLC column 13. The first flow channel 23 and the second flow channel 24 are the flow channels through which the eluent 41a and the sample 42a flow simultaneously to constitute the main flow channel of the HPLC apparatus 10.

The third flow channel 26 is a flow channel that connects the HPLC column 13 to the detector 31, and the fourth flow channel 27 is a flow channel that connects the detector 31 to the pressure relief unit 34.

The waste liquid flow channel 25 is a flow channel that discharges the fluid in the flow channels of the HPLC apparatus 10 into the waste liquid tank 43 as a waste liquid 43a.

The air introduction channel 28 is a flow channel that introduces air from outside the HPLC apparatus 10 into the first flow channel 23. One end of the air introduction channel 28 is connected to the switching valve 14, and the other end of the air introduction channel 28 constitutes an opened air intake.

The pump 11 is the pumping unit that pumps the eluent 41a and/or the sample 42a to the HPLC column 13 and is connected to the HPLC column 13 via the switching valve 14.

The detector 31 is provided at the rear of the HPLC column 13 in the main flow channel.

The sample 42a introduced into the HPLC column 13 is separated for each of components by interaction with the stationary phase retained inside the HPLC column 13. The detector 31 detects the components separated in the HPLC column 13 and transmits the detected detection data to the data processing unit 33.

The data processing unit 33 analyzes the detection data detected by the detector 31 to identify and quantify each of the components in the sample (i.e., liquid sample). The data processing unit 33 transmits the analyzed analysis results to the controller unit 32.

The controller unit 32 controls the operations of the pump 11 and the switching valve 14. By switching the switching valve 14, the controller unit 32 is able to switch the flow channel connected to the first flow channel 23 to any of the eluent flow channel 21, the sample flow channel 22, the second flow channel 24, and the air introduction channel 28. The controller unit 32 is also able to switch the flow direction of the fluid flowing in the flow channels of the HPLC apparatus 10 by controlling the suction and discharge operations of the pump 11.

Furthermore, the controller unit 32 may control the operation of the pump 11 based on pressure data obtained from the pressure gauge 35 installed in the first flow channel 23, as described below.

In addition, the controller unit 32 may receive the analysis results analyzed by the data processing unit 33 and, if necessary, transmit the analysis results externally or display the analysis results on a monitor or other device (not shown).

Hereinafter, the operating processes of the HPLC apparatus 10 according to the present embodiment will be described below in detail with reference to FIGs. 2 to 13. It should be noted that, in FIGs. 2 to 8, 10, and 12, the controller unit 32 and the data processing unit 33 are omitted.

The operating processes according to the present embodiment include three major steps: a preparation process, a sampling process, and an analysis process.

### (1) Preparation Process

The preparation process includes a suction step of the eluent 41a (STEP 1) and a subsequent replacement step (STEP 2) in which the inside of the HPLC column 13 is replaced by the eluent 41a.

### [STEP 1: Suction of Eluent]

FIG. 2 is a schematic diagram illustrating an exemplary suction step of the eluent (STEP 1).

In STEP 1, the controller unit 32, which is omitted from the figure, performs switching operation of the switching valve 14 to connect the eluent flow channel 21 to the first flow channel 23. Subsequently, the controller unit 32 performs suction operation of the pump 11 to suction the eluent 41a from the eluent tank 41, and introduces the suctioned eluent 41a into the first flow channel 23 through the eluent flow channel 21 and the switching valve 14. The first flow channel 23 between the switching valve 14 and the pump 11 functions as a reservoir flow channel for the eluent 41a.

It should be noted that, in FIG. 2, bold lines hypothetically illustrate that the eluent flow channel 21 and the first flow channel 23 are filled with the eluent 41a, respectively.

### [STEP 2: Replacement with Eluent]

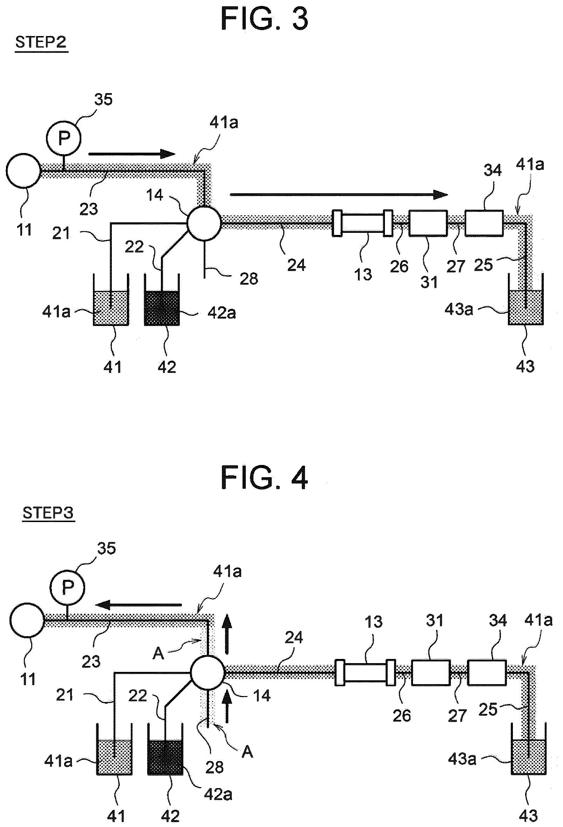

FIG. 3 is a schematic diagram illustrating an exemplary replacement step with the eluent (STEP 2).

In STEP 2, the controller unit 32, which is omitted from the figure, performs the switching operation of the switching valve 14 to connect the first flow channel 23 to the second flow channel 24. Subsequently, the controller unit 32 performs discharge operation of the pump 11 to introduce a portion of the eluent 41a, which has been introduced into the first flow channel 23, into the HPLC column 13 through the first flow channel 23, the switching valve 14, and the second flow channel 24. At least a portion of the eluent 41a introduced into the HPLC column 13 is stored in the waste liquid tank 43 through the third flow channel 26, the detector 31, the fourth flow channel 27, the pressure relief unit 34, and the waste liquid flow channel 25.

By performing the above operations, at least part of the first flow channel 23, the second flow channel 24, the HPLC column 13, the third flow channel 26, the detector 31, the fourth flow channel 27, the pressure relief unit 34, and the waste liquid flow channel 25 are filled with the eluent 41a, respectively.

It should be noted that, in FIG. 3, bold lines hypothetically illustrate that the first flow channel 23, the second flow channel 24, the third flow channel 26, the fourth flow channel 27, and the waste liquid flow channel 25 are filled with the eluent 41a, respectively.

### (2) Sampling Process

The sampling process following the preparation process includes a first air suction step (STEP 3), a liquid sample suction step (STEP 4) following the first air suction step, and a second air suction step (STEP 5).

### [STEP 3: First Air Suction Step]

FIG. 4 is a schematic diagram illustrating an exemplary first air suction step (STEP 3).

In STEP 3, the controller unit 32, which is omitted from the figure, performs the switching operation of the switching valve 14 to connect the first flow channel 23 to the air introduction channel 28. Subsequently, the controller unit 32 performs the suction operation of the pump 11 to introduce air A from the air inlet of the air introduction channel 28 into the first flow channel 23 through the switching valve 14. At this time, air A is introduced into the first flow channel 23 as air bubbles.

In other words, the inside of the first flow channel 23 is at least partially filled with the eluent 41a, while air (i.e., air bubbles) A is introduced in the first flow channel 23 on the switching valve 14 side. The inside of the second flow channel 24, the HPLC column 13, the third flow channel 26, the detector 31, the fourth flow channel 27, the pressure relief unit 34, and the waste liquid flow channel 25 are replaced with the eluent 41a, respectively.
It should be noted that FIG. 4 hypothetically illustrates that the air bubbles A are being introduced into the first flow channel 23 on the switching valve 14 side.

Here, between the replacement step with the eluent 41a (STEP 2) and the first air suction step (STEP 3), it is preferable to provide a period during which the pump 11 is stopped for a certain period of time.

In general, the conductance of the HPLC column 13 is small. Therefore, in STEP 2, when the eluent 41a retained in the first flow channel 23 is introduced into the second flow channel 24 and subsequent flow channels by the discharge operation of the pump 11, then the pressure in the first flow channel 23 and the second flow channel 24 increases.
Under such a situation, when the switching operation of the switching valve 14 is performed in STEP 3 to connect the first flow channel 23 to the air introduction channel 28, at least a portion of the eluent 41a in the first flow channel 23 is likely to flow back into the air introduction channel 28. In other words, the volume of air introduced into the first flow channel 23 may not be the desired volume.

For this reason, after STEP 2 is completed, it is preferable to stop the pumping operation of the pump 11 and perform STEP 3 after a certain standby time has elapsed. As a result, the pressure in the flow channels from the first flow channel 23, the switching valve 14, and the second flow channel 24 to the waste liquid flow channel 25 gradually decreases as the waste liquid 43a flows into the waste liquid tank 43. By performing the process of STEP 3 after the pressure in the flow channels above has sufficiently decreased (e.g., to a pressure equivalent to atmospheric pressure), it makes it possible to introduce air A into the first flow channel 23 without backflow of the eluent 41a in the first flow channel 23 and second flow channel 24 into the air introduction channel 28.

### [STEP 4: Liquid Sample Suction Step]

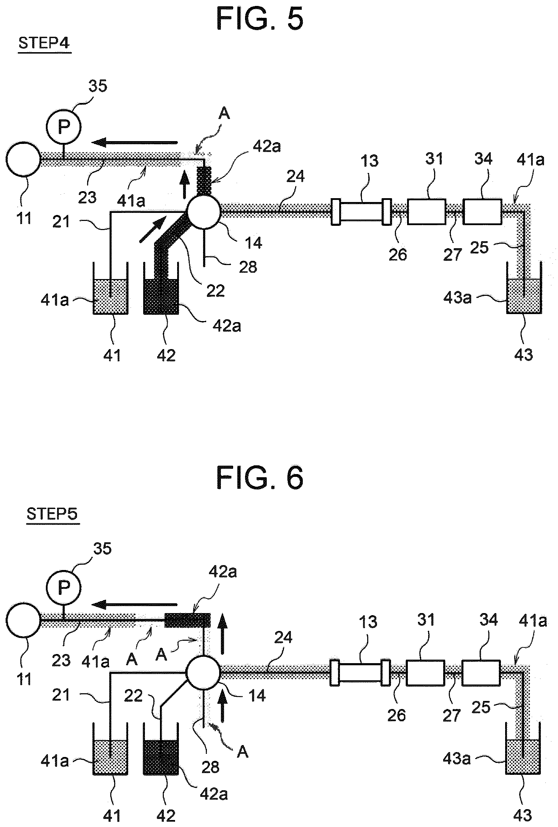

FIG. 5 is a schematic diagram illustrating an exemplary liquid sample suction step (STEP 4).

In STEP 4, the controller unit 32, which is omitted from the figure, performs the switching operation of the switching valve 14 to connect the first flow channel 23 to the sample flow channel 22. Subsequently, the controller unit 32 performs the suction operation of the pump 11 to suction the sample 42a from the sample tank 42 and introduces the suctioned sample 42a into the first flow channel 23 through the sample flow channel 22 and the switching valve 14.

In STEP 4, in the first flow channel 23, the sample 42a is filled between the air bubbles A introduced into the first flow channel 23 in STEP 3 and the switching valve 14. In other words, in the first flow channel 23, the eluent 41a, which is filled on the pump 11 side, and the sample 42a, which is filled on the switching valve 14 side, are separated from each other by the air bubbles A, thus the eluent 41a and the sample 42a are not mixed with each other. The interior of the second flow channel 24, the HPLC column 13, the third flow channel 26, the detector 31, the fourth flow channel 27, the pressure relief unit 34, and the waste liquid flow channel 25 are each replaced with the eluent 41a. It should be noted that FIG. 5 hypothetically illustrates that the sample 42a is being introduced into the first flow channel 23 on the switching valve 14 side, and the eluent 41a and the sample are separated from each other by the air bubbles A.

### [STEP 5: Second Air Suction Step]

FIG. 6 is a schematic diagram illustrating an exemplary second air suction step (STEP 5).

In STEP 5, the controller unit 32, which is omitted from the figure, performs the switching operation of the switching valve 14 to connect the first flow channel 23 to the air introduction channel 28. Subsequently, the controller unit 32 performs the suction operation of the pump 11 to introduce air A from the air inlet of the air introduction channel 28 into the first flow channel 23 through the switching valve 14. At this time, air A is introduced into the first flow channel path 23 as air bubbles.

In STEP 5, in the first flow channel 23, air bubbles A are introduced between the sample 42a introduced into the first flow channel 23 in STEP 4 and the switching valve 14. As a result, in the first flow channel 23, the sample 42a is sandwiched between the air bubbles A at both ends, in other words, the sample 42a becomes an air-segmented sample. The interior of the second flow channel 24, the HPLC column 13, the third flow channel 26, the detector 31, the fourth flow channel 27, the pressure relief unit 34, and the waste liquid flow channel 25 are each replaced with the eluent 41a.

It should be noted that FIG. 6 hypothetically illustrates that the air bubbles A are introduced into the switching valve 14 side in the first flow channel 23, and the air-segmented sample is being formed in the first flow channel 23.

### (3) Analysis Process

The analysis process following the sampling process includes an air-segmented sample discharge step (STEP 6), a subsequent compression step (STEP 7), and a subsequent detection step (STEP 8).

### [STEP 6: Air-Segmented Sample Discharge Step]

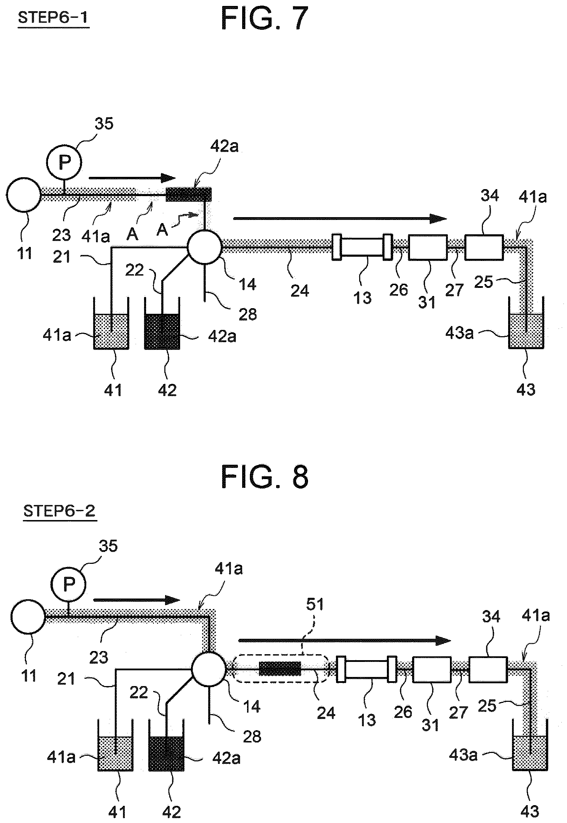

FIGs. 7 and 8 are schematic diagrams each illustrating an exemplary discharge step (STEP 6) that discharges the air-segmented sample from the first flow channel 23 toward the HPLC column 13.

In STEP 6, the controller unit 32, which is omitted from the figure, performs the switching operation of the switching valve 14 to connect the first flow channel 23 to the second flow channel 24. Subsequently, the controller unit 32 performs the discharge operation of the pump 11 to discharge air bubbles A, the sample 42a, air bubbles A, and the eluent 41a in the first flow channel 23, in this order, to the second flow channel 24.

It should be noted that FIG. 7 hypothetically illustrates the situation immediately after the pump 11 starts its discharge operation, and the air-segmented sample (i.e., air bubbles A, the sample 42a, air bubbles A) in the first flow channel 23 is not significantly changed from the air-segmented sample shown in FIG. 6, which has been formed in STEP 6.

By continuously performing the discharge operation of the pump 11 from the situation shown in FIG. 7, the air-segregated sample that has been present in the first flow channel 23 is discharged and then introduced into the second flow channel 24, as shown in FIG. 8.

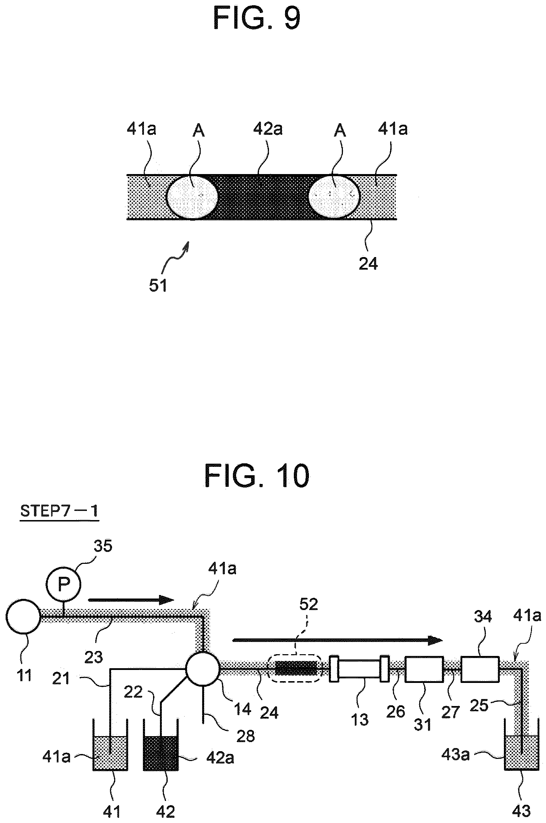

FIG. 9 is a schematic diagram illustrating an exemplary state of the sample 42a introduced into the second flow channel 24, and illustrates an internal image of the second flow channel 24 denoted by the reference sign 51 in FIG. 8. As shown in FIG. 9, in the second flow channel 24, the sample 42a is sandwiched between air bubbles A at both ends and is separated from the eluent 41a by the air bubbles A. In other words, the eluent 41a and the sample 42a are not mixed with each other.

### [STEP 7: Compression Step]

FIGs. 10 to 13 are schematic diagrams each illustrating an exemplary compression step (STEP 7).

In STEP 7, the state of the switching valve 14 is the same as in STEP 6, with the first flow channel 23 being connected to the second flow channel 24.

As described above, the conductance of the HPLC column 13 is generally small. Therefore, the pressure inside the first flow channel 23 and the second flow channel 24 increases as a result of the discharge operation of the pump 11.

When performing the discharge operation of the pump 11 to introduce the sample 42a into the HPLC column 13, the pressure in the first flow channel 23 and the second flow channel 24 increases to compress the air-segmented sample introduced into the second flow channel 24. As a result, at least a part of the air bubbles A constituting the air-segmented sample is dissolved in at least one of the eluent 41a and the sample 42a, and the volume of the air bubbles A is reduced.

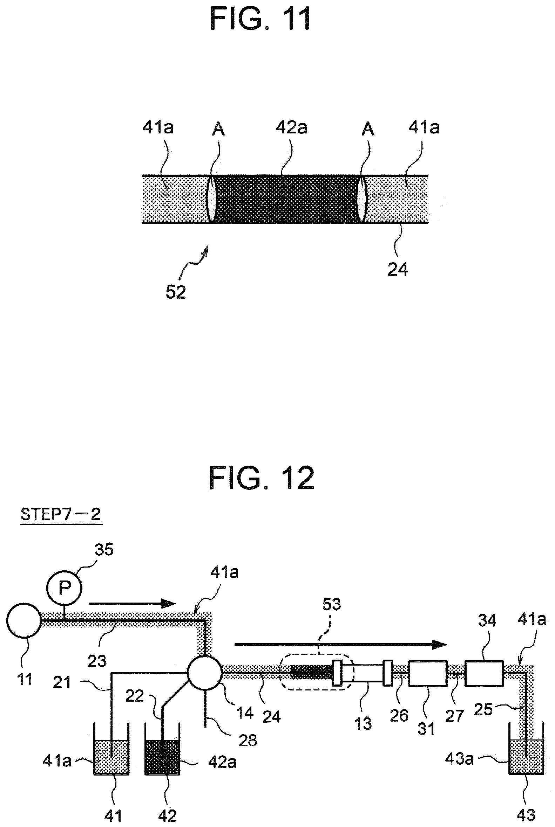

FIG. 11 is a schematic diagram illustrating an exemplary internal image of the second flow channel 24, which is denoted by the reference sign 52 in FIG. 10. As shown in FIG. 11, as the air-segmented sample is compressed, the volume of the air bubbles A decreases from the original volume of the air bubbles A introduced in the first flow channel 23.

The pressure inside the first flow channel 23 and the second flow channel 24 gradually increases from the time the pump 11 starts to discharge during the discharge operation of the pump 11. The increase in pressure depends on the diameters of the flow channels, the lengths of the flow channels, the conductance of the flow channels downstream of the HPLC column 13 including the HPLC column 13, and the discharge rate per unit time of the pump 11.

Therefore, according to the present embodiment, the volume of air bubbles A to be introduced in STEP 3 and STEP 5 is set such that the air bubbles A are completely dissolved into the eluent 41a or the sample 42a immediately before the liquid inlet of the HPLC column 13 in the second flow channel 24 by increasing the pressure in the second flow channel 24 (i.e., such that the air bubbles A disappear).

By introducing a predetermined volume of air bubbles A as described above, when the pressure in the second flow channel 24 increases with the discharge operation of the pump 11, it makes it possible to completely dissolve the air bubbles A into the eluent 41a or the sample 42a immediately before the HPLC column 13 in the second flow channel 24, as shown in FIG. 12.

FIG. 13 is a schematic diagram illustrating an exemplary internal image of the second flow channel 24, denoted by the reference sign 53 in FIG. 12. As shown in FIG. 13, it makes it possible to eliminate the air bubbles A completely, immediately before the HPLC column 13.

Here, the amount of air bubbles A to be introduced may be, for example, equal to or greater than 1 µl (microliter) and equal to or less than 45 µl. For example, when the length of air bubbles A in the flow channel is 1 mm, it makes it possible to separate the eluent 41a from the sample 42a appropriately. Therefore, a minimum volume of 1 microliter of air bubbles A is sufficient, although it depends on the diameter of the flow channel. On the other hand, the larger the volume of the air bubbles A, the higher the pressure value required to completely dissolve the air bubbles A into the eluent 41a or the sample 42a. For this reason, it is preferable that the maximum volume of air bubbles A be about 45 microliters, depending on the discharge capacity of the pump 11.

Furthermore, the amount of air bubbles A to be introduced may be determined by prior experimentation or simulation. For example, when determining the amount of air bubbles A to be introduced by experiment, a transparent conduit (e.g., tube) may be used to determine the appropriate amount of the air bubbles A to be introduced by visually confirming that the air bubbles A disappear immediately before the HPLC column 13. After the amount of air bubbles A to be introduced is determined, the conduit (e.g., tube) does not need to be transparent any more.

The present embodiment described above describes a certain case in which the amount of air bubbles A to be introduced is set such that the air bubbles A are completely dissolved into the eluent 41a or the sample 42a immediately before the HPLC column 13 in the second flow channel 24. Alternatively, according to another embodiment, the discharge rate per unit time of the pump 11 (hereinafter simply referred to as "discharge rate") may be adjusted such that the air bubbles A are completely dissolved into the eluent 41a or the sample 42a immediately before the HPLC column 13 in the second flow channel 24.

It is possible to calculate in advance the pressure value in the flow channels when a predetermined amount of air bubbles A introduced into the first flow channel 23 is completely dissolved into the eluent 41a or the sample 42a (hereinafter referred to as "target pressure value"). Therefore, the discharge rate of the pump 11 may be adjusted such that, for example, the pressure value measured by the pressure gauge 35 installed in the first flow channel 23 coincides with (or substantially coincides with) the above target pressure value when the air bubbles A are passing through the second flow channel 24.

More specifically, the pressure gauge 35 transmits the measured pressure values (i.e., pressure values of the first flow channel 23 and the second flow channel 24) to the controller unit 32, and the control unit 32 may compare the pressure values received from the pressure gauge 35 with the target pressure value and control the operation of the pump 11 such that the pressure values of the first flow channel 23 and the second flow channel 24 coincide (or substantially coincide with) the above target pressure value.

As described above, by adjusting the amount of air bubbles A to be introduced or the discharge rate of the pump 11 in such a manner, only the sample 42a and the eluent 41a are introduced into the HPLC column 13, while no air bubbles A are introduced.

By performing the processes described above, according to the present embodiment, the sample 41a is transported in the first flow channel 23 and the second flow channel 24 as the air-segmented sample until the sample 41a reaches immediately before the liquid inlet of the HPLC column 13. In other words, the sample 42a is transported in the first flow channel 23 and the second flow channel 24 while being segmented from the eluent 41a by the air bubbles A positioned in front and behind thereof. Therefore, it makes it possible to avoid undesired diffusion of the sample 42a inside the first flow channel 23 and the second flow channel 24.

On the other hand, the air bubbles A, which are positioned in front and behind the sample 42a constituting the air-segmented sample by performing the above described processes, are dissolved into the eluent 41a or the sample 42a at the time the sample 42a reaches immediately before the liquid inlet of the HPLC column 13. Therefore, it makes it possible to prevent the air bubbles A from being introduced into the HPLC column 13 or the detector 31.

As a result, possible defects such as insufficient separation in the HPLC column 13 of each of the detectable components constituting the sample 42a and noise caused by air (e.g., air bubbles) in the detector 31 are unlikely to occur.

### [STEP 8: Detection Step]

In STEP 8, the state of the switching valve 14 is the same as in STEP 7, with the first flow channel 23 being connected to the second flow channel 24.

In STEP 8, the controller unit 32 continues the discharging operation of the pump 11 to introduce the eluent 41a and the sample 42a in the second flow channel 24 into the HPLC column 13.

As the sample 42a flows through the HPLC column 13 together with the eluent 41a, respective components constituting the sample 42a move while interacting with the HPLC column 13, which is the stationary phase. The difference in the intensity of the interaction between each of the components and the HPLC column 13 determines the elution time of each of the components from the HPLC column 13. In other words, each of the components in the sample 42a is separated using the difference in elution time of each of the components passing through the HPLC column 13.
The separated components are subsequently detected by the detector 31 positioned at the rear of the HPLC column 13. At this time, the detector 31 obtains a signal corresponding to each of the components depending on the elution time of each of the components eluting from the HPLC column 13.

Subsequently, the fluid discharged from the detector 31 is discharged into the waste liquid tank 43 via the waste liquid flow channel 25 and retained as the waste liquid 43a.

It should be noted that the HPLC apparatus 10 may be equipped with a pressure relief unit 34 with low conductance downstream of the detector 31.
The pressure relief unit 34 may be provided with a flow channel having a cross-sectional area smaller than a cross-sectional area of the third flow channel 26 at, for example, at least a part of the fourth flow channel 27. The pressure relief unit 34 allows the pressure in the flow channels downstream of the HPLC column 13 to be maintained, so that the fluid discharged from the HPLC column 13 is not pressure-relieved so as to prevent the air bubbles A from being formed again. As a result, it makes it possible to suppress the air from being introduced into the detector 31.

Out of the above described STEPs, STEP 1 and STEP 2 correspond to the first step, STEP 3 through STEP 5 correspond to the second step, STEP 6 corresponds to the third step, STEP 7 corresponds to the fourth step, and STEP 8 corresponds to the fifth step.

As described above, the HPLC apparatus 10 according to the present embodiment is equipped with the single pump 11, the switching valve 14, the HPLC column 13, the first flow channel 23, which connects between the pump 11 and the switching valve 14 and through which the eluent 41a and the sample (i.e., liquid sample) 42a flow simultaneously, the second flow channel 24, which connects between the switching valve 14 and the HPLC column 13 and through which the eluent 41a and the sample 42a flow simultaneously, and the air introduction channel 28 connected at one end to the switching valve 14. The HPLC system 10 is also equipped with the detector 31 that detects the components separated in the HPLC column 13, and a controller unit 32 that controls the pump 11 and the switching valve 14.

The controller unit 32 is able to control the pump 11 and the switching valve 14 to switch the introduction of the eluent 41a and the sample 42a into the first flow channel 23 to introduce air bubbles between eluent 41a and sample 42a from the air introduction channel 28, thereby generating an air-segmented sample (i.e., air-segmented liquid sample) in the first flow channel 23, which is arranged in the order of air bubbles A, the sample 42a, air bubbles A. Furthermore, the controller unit 32 is also able to control the pump 11 and the switching valve 14 to allow the air-segmented sample to flow from the first flow channel 23 into the second flow channel 24 and to dissolve the air bubbles A passing through the second flow channel 23 into at least one of the eluent 41a and the sample 42a.

As described above, through the use of even a single pump 11, it makes it possible to realize the introduction of the eluent 41a and the sample 42a into the first flow channel 23 as well as the pumping of the mixed liquid of the eluent 41a and the sample 42a to the HPLC column 13. Therefore, as installing multiple pumps is not required, it makes it possible to realize downsizing and cost reduction by eliminating installation of extra pumps. As a result, it makes the HPLC apparatus widely available to farmers who produce plants (e.g., vegetables and other crops).

Furthermore, since the pump 11 is arranged outside the path from the first flow channel 23 to the HPLC column 13 through the switching valve 14 and the second flow channel 24, it allows the pump 11 to be configured so that the fluid does not pass through the pump 11. Therefore, it makes it possible to prevent the fluid from dispersing (i.e., diffusing) as the fluid passes through the pump 11, thereby preventing degradation of the separation resolution in the HPLC column 13.

Yet furthermore, according to the present embodiment, the HPLC apparatus 10 generates the air-segmented sample in the first flow channel 23 and directs the generated air-segmented sample to flow towards the HPLC column 13 through the second flow channel 24. Thus, it allows the sample 42a to be pumped to the HPLC column 13 in a state in which the eluent 41a and the sample 42a are separated from each other by air bubbles A. As a result, it makes it possible to appropriately suppress the undesired diffusion of the sample 42a before the sample 42a is introduced into the HPLC column 13, thereby preventing degradation of the separation capacity in the HPLC column 13.

Yet furthermore, according to the present embodiment, the HPLC apparatus 10 is able to dissolve the air bubbles A, which constitute the air-segmented sample, into at least one of the eluent 41a and the sample 42a in the second flow channel 24. In other words, the air bubbles A can be eliminated before the air bubbles A are introduced into the HPLC column 13 and the detector 31. As a result, it makes it possible to appropriately avoid defects such as degraded separation resolution in the HPLC column 13 and noise generation in the detector 31 caused by the air bubbles A.

In addition, when the air bubbles A are dissolved into the eluent 41a or the sample 42a immediately before the liquid inlet of the HPLC column 13, it makes it possible to suppress undesired diffusion of the sample 42a in the flow channels more appropriately.

The controller unit 32 is able to dissolve the air bubbles A passing through the second flow channel 24 into the eluent 41a and the sample 42a, by controlling at least one of the volume of the air bubbles A, which are introduced from the air introduction channel 28 between the eluent 41a and the sample 42a, and the discharge rate of the pump 11 when the air-segmented sample flows from the first flow channel 23 into the HPLC column 13 through the second flow channel 24.

More specifically, the controller unit 32 introduces, between the eluent 41a and the sample 42a, air bubbles A having the volume that allows the air bubbles A passing through the second flow channel 24 to be dissolved into the eluent 41a or the sample 42a by the pressure inside the second flow channel 24, which is generated when the air-segmented sample flows from the first flow channel 23 into the second flow channel 24 by the discharging operation of the pump 11.
Here, the pressure inside the second flow channel 24, which is generated when the air-segmented sample flows from the first flow channel 23 into the second flow channel 24, is determined based on at least one of the discharge rate of the pump 11 when the air-segmented sample flows from the first flow channel 23 into the second flow channel 24, the conductance of the HPLC column 13, the diameters of the first flow channel 23 and the second flow channel 24, and the lengths of the first flow channel 23 and the second flow channel 24. Therefore, by introducing the air bubbles A having the volume set based on those conditions, it makes it possible to reliably dissolve the air bubbles A in the second flow channel 24.

Furthermore, the controller unit 32 may control the discharge rate of the pump 11 to apply the pressure (i.e., target pressure value) to the interior of the second flow channel 24 such that the air bubbles A passing through the second flow channel 24 are dissolved into the eluent 41a or the sample 42a when the air-segmented sample is flowing from the first flow channel 23 into the HPLC column 13 through the second flow channel 24.

Here, the pressure at which the air bubbles A introduced from the air introduction channel 28 dissolve into the eluent 41a or the sample 42a is determined based on at least one of the volume of the air bubbles A introduced from the air introduction channel 28, the conductance of the HPLC column 13, the diameters of the first flow channel 23 and the second flow channel 24, and the lengths of the first flow channel 23 and the second flow channel 24. Therefore, alternatively by controlling the discharge rate of the pump 11 to apply the target pressure value set based on those conditions, it makes it possible to reliably dissolve the air bubbles A in the second flow channel 24.

It should be noted that the above embodiment describes a certain case in which the air bubbles A are completely dissolved immediately before the liquid inlet of the HPLC column 13. However, alternatively, the air bubbles A do not need to be completely dissolved. It would be sufficient for the air bubbles A to be small enough such that the separation resolution of each of the components in the HPLC column 13 and the noise in the detector 31 are acceptable.

As described above, the HPLC apparatus 100 according to the present embodiment is a liquid sample analysis apparatus employing the liquid chromatography, which is capable of improving the separation resolution and the measurement accuracy of each of the components of the sample while reducing the size and cost of the liquid sample analysis apparatus.

Although certain embodiments are described above, the above described embodiments are merely illustrative and are not intended to limit the scope of the present invention. The apparatus and methods described herein may be embodied in forms other than those described above. Also, without departing from the scope of the present invention, omissions, substitutions, and modifications may be made to the above embodiments as appropriate. Such omitted, substituted and modified embodiments are also included in the scope of the claims and their equivalents, and belong to the technical scope of the present invention.

### REFERENCE SIGNS LIST

10: Liquid Sample Analysis Apparatus (HPLC Apparatus); 11: Pump; 12: Switching Valve; 13: HPLC Column; 14: Switching Valve; 21: Eluent Flow Channel; 22: Sample Flow Channel (Liquid Sample Flow Channel); 23: First Flow Channel; 24: Second Flow Channel; 25: Drain Flow Channel; 26: Third Flow Channel; 27: Fourth Flow Channel; 28: Air Introduction Channel; 31: Detector; 32: Controller Unit; 33: Data Processing Unit; 41: Eluent Tank; 41a: Eluent; 42: Sample Tank; 42a: Sample (Liquid Sample); 43: Waste Liquid Tank; 43a: Waste Liquid; A: Air (Air Bubbles)

## Claims

1. A liquid chromatograph comprising:
a single pump configured to suction and discharge a fluid;
a switching valve equipped with ports in multiple directions;
a column to which a liquid containing an eluent and a liquid sample is fed, the column being configured to separate a component of the liquid sample by interaction with a stationary phase retained inside the column;
a first flow channel configured to connect between the pump and the switching valve to allow the eluent and the liquid sample to flow simultaneously therethrough;
a second flow channel configured to connect between the switching valve and the column to allow the eluent and the liquid sample to flow simultaneously therethrough;
an air introduction channel connected at one end thereof to the switching valve;
a detector configured to detect the component separated in the column; and
a controller unit configured to control the pump and the switching valve,
the controller unit controlling the pump and the switching valve to switch introduction of the eluent and the liquid sample into the first flow channel, and to introduce air bubbles from the air introduction channel between the eluent and the liquid sample to generate an air-segmented liquid sample in the first flow channel containing the eluent therein, the air-segmented liquid sample having the air bubbles, the liquid sample, and the air bubbles arranged therein in order, and
the controller unit controlling the pump and the switching valve to flow the eluent and the air-segmented liquid sample from the first flow channel into the second flow channel to dissolve the air bubbles passing through the second flow channel into at least one of the eluent and the liquid sample.

2. The liquid chromatograph according to Claim 1, wherein
the controller unit dissolves the air bubbles into at least one of the eluent and the liquid sample immediately before a liquid inlet of the column in the second flow channel.

3. The liquid chromatograph according to Claim 1 or 2, wherein
the controller unit controls a volume of the air bubbles to be introduced from the air introduction channel between the eluent and the liquid sample to dissolve the air bubbles passing through the second flow channel into at least one of the eluent and the liquid sample.

4. The liquid chromatograph according to Claim 3, wherein
the volume of the air bubbles to be introduced between the eluent and the liquid sample is set based on a discharge rate per unit time of the pump when flowing the air-segmented liquid sample from the first flow channel into the second flow channel, conductance of the column, channel diameters of the first flow channel and the second flow channel, and lengths of the first flow channel and the second flow channel.

5. The liquid chromatograph according to Claim 3, wherein
the volume of the air bubbles to be introduced between the eluent and the liquid sample is set to be equal to or greater than 1 microliter and equal to or less than 45 microliters.

6. The liquid chromatograph according to Claim 1 or 2, wherein
the controller unit controls a discharge rate per unit time of the pump when flowing the air-segmented liquid sample from the first flow channel into the column through the second flow channel to dissolve the air bubbles passing through the second flow channel into at least one of the eluent and the liquid sample.

7. The liquid chromatograph according to Claim 6, wherein
the discharge rate per unit time of the pump when flowing the air-segmented liquid sample from the first flow channel into the column through the second flow channel is set based on a volume of the air bubbles introduced from the air introduction channel, conductance of the column, channel diameters of the first flow channel and the second flow channel, and lengths of the first flow channel and the second flow channel.

8. The liquid chromatograph according to Claim 1 or 2, further comprising:
a pressure relief unit arranged downstream of the detector.

9. The liquid chromatograph according to Claim 8, wherein
the pressure relief unit includes a flow channel provided on a flow channel downstream of the detector and having a cross-sectional area smaller than a cross-sectional area of a third flow channel connecting the column to the detector.

10. The liquid chromatograph according to Claim 1 or 2, further comprising:
an eluent flow channel configured to collect the eluent stored in an eluent tank; and
a liquid sample flow channel configured to collect the liquid sample stored in a liquid sample tank, wherein
one end of the eluent flow channel and one end of the liquid sample flow channel are connected to the switching valve, respectively.

11. A method of analyzing a liquid sample performed by a liquid chromatograph, the liquid chromatograph comprising:
a single pump configured to suction and discharge a fluid;
a switching valve equipped with ports in multiple directions;
a column to which a liquid containing an eluent and a liquid sample is fed, the column being configured to separate a component of the liquid sample by interaction with a stationary phase retained inside the column;
a first flow channel configured to connect between the pump and the switching valve to allow the eluent and the liquid sample to flow simultaneously therethrough;
a second flow channel configured to connect between the switching valve and the column to allow the eluent and the liquid sample flow simultaneously therethrough;
an air introduction channel connected at one end thereof to the switching valve; and
a detector configured to detect the component separated in the column,
the method comprising:
a first step of controlling the pump and the switching valve to introduce a portion of the eluent from the first flow channel into the column through the second flow channel to fill the column with the eluent;
a second step of controlling the pump and the switching valve to introduce the liquid sample and air bubbles from the air introduction channel into the first flow channel containing the eluent therein to generate an air-segmented liquid sample in the first flow channel containing the eluent therein, the air-segmented liquid sample having the air bubbles, the liquid sample, and the air bubbles arranged therein in order;
a third step of controlling the pump and the switching valve to allow the eluent and the air-segmented liquid sample to flow from the first flow channel to the second flow channel;
a fourth step of dissolving the air bubbles passing through the second flow channel into at least one of the eluent and the liquid sample; and
a fifth step of separating a liquid containing the eluent and the liquid sample with the column and detecting a separated component of the liquid sample by the detector.

12. The method of analyzing a liquid sample according to Claim 11, wherein
the second step controls the pump and the switching valve to introduce air bubbles from the air introduction channel through the switching valve into the first flow channel containing the eluent therein;
subsequently controls the pump and the switching valve to introduce the liquid sample from a liquid sample flow channel through the switching valve into the first flow channel, the liquid sample flow channel being connected at one end thereof to the switching valve and configured to collect the liquid sample stored in a liquid sample tank; and
subsequently controls the pump and the switching valve to introduce air bubbles from the air introduction channel through the switching valve into the first flow channel.

13. The method of analyzing a liquid sample according to Claim 11 or 12, wherein
the second step is performed after the first step has been performed, an operation of the pump has been stopped, and a certain standby time has elapsed.

14. The method of analyzing a liquid sample according to Claim 11 or 12, wherein
the first step controls the pump and the switching valve to introduce the eluent from an eluent flow channel through the switching value into the first flow channel, the eluent flow channel being connected at one end thereof to the switching value and configured to collect the eluent stored in an eluent tank; and
subsequently controls the pump and the switching valve to introduce a portion of the eluent from the first flow channel through the second flow channel into the column to fill the column with the eluent.

15. The method of analyzing a liquid sample according to Claim 11 or 12, wherein
the second step introduces air bubbles of a prescribed volume set based on a discharge rate per unit time of the pump in the third step, conductance of the column, channel diameters of the first flow channel and the second flow channel, and lengths of the first flow channel and the second flow channel.

16. The method of analyzing a liquid sample according to Claim 14, wherein
the second step introduces the air bubbles of a volume equal to or greater than 1 microliter and equal to or less than 45 microliters between the eluent and the liquid sample.

17. The method of analyzing a liquid sample according to Claim 11 or 12, wherein
the fourth step controls the discharge rate per unit time of the pump based on a volume of the air bubbles introduced from the air introduction channel in the second step, conductance of the column, channel diameters of the first flow channel and the second flow channel, and lengths of the first flow channel and the second flow channel.
